(19) Europäisches Patentamt
European Patent Office
Office européen des brevets

(11) **EP 2 893 169 B1**

(12) **FASCICULE DE BREVET EUROPEEN**

(45) Date de publication et mention
de la délivrance du brevet:
**05.04.2017 Bulletin 2017/14**

(21) Numéro de dépôt: **13767024.6**

(22) Date de dépôt: **27.08.2013**

(51) Int Cl.:
**F02C 7/268** (2006.01)     **F02C 7/275** (2006.01)

(86) Numéro de dépôt international:
**PCT/FR2013/051977**

(87) Numéro de publication internationale:
**WO 2014/037649 (13.03.2014 Gazette 2014/11)**

(54) **PROCÉDÉ ET SYSTÈME DE DÉMARRAGE D'UN TURBOMOTEUR D'AERONEF**

VERFAHREN UND SYSTEM ZUM STARTEN EINES FLUGZEUGSTURBOTRIEBWERKS

METHOD AND SYSTEM FOR STARTING AN AIRCRAFT TURBOENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.09.2012 FR 1258460**

(43) Date de publication de la demande:
**15.07.2015 Bulletin 2015/29**

(73) Titulaire: **Safran Helicopter Engines
64510 Bordes (FR)**

(72) Inventeurs:
• **HARRIET, Pierre**
**F-64140 Billere (FR)**
• **MARIN, Jean Philippe, Jacques**
**F-64110 Jurancon (FR)**

(74) Mandataire: **Gevers & Orès
9 rue St Antoine du T
31000 Toulouse (FR)**

(56) Documents cités:
EP-A1- 0 623 741     EP-A1- 0 942 521
US-A1- 2009 069 998     US-A1- 2011 094 241

**Description**

La présente invention concerne un procédé et un système pour le démarrage d'un turbomoteur d'aéronef.

Un turbomoteur d'aéronef comprend de manière connue une chambre de combustion, un arbre de compresseur sur lequel est montée une roue de compresseur pour alimenter en air comprimé ladite chambre de combustion et au moins un démarreur (ou une génératrice-démarreur) relié audit arbre de manière à lui fournir le couple de démarrage suffisant pour l'entrainer en rotation.

Pour démarrer le turbomoteur, le démarreur accélère tout d'abord l'arbre de compresseur dans une première phase de démarrage pendant laquelle le circuit carburant en amont des injecteurs de démarrage est mis en pression et purgé. Puis, dans une deuxième phase de démarrage, une injection de combustible est initiée avant que l'allumage dudit combustible ne soit réalisé dans la chambre de combustion du turbomoteur. Enfin, dans une troisième phase de démarrage, à une vitesse de rotation prédéfinie, l'action du démarreur est arrêtée et le turbomoteur peut continuer d'accélérer grâce à la combustion dudit combustible.

Pour permettre l'allumage du combustible, un volume d'air suffisant doit être fourni par la roue de compresseur à la chambre de combustion mais ce volume ne doit pas être non plus trop important, car il empêcherait alors l'allumage du combustible. Or, la vitesse de rotation de l'arbre de compresseur étant proportionnelle au volume d'air fourni par la roue de compresseur à la chambre de combustion, la vitesse de rotation de l'arbre doit donc être comprise dans un intervalle de vitesse, appelé fenêtre d'allumage, et ce pendant un temps suffisamment long pour que l'allumage soit réalisé correctement.

Le document WO2011/056360 décrit un procédé d'allumage d'une turbine à gaz dans lequel la vitesse de rotation de la turbine est contrôlée de sorte à être maintenue à plus ou moins 5% d'une vitesse prédéfinie, dite d'allumage, pendant la deuxième phase de démarrage. Cependant, un problème se pose lorsque l'accélération de l'arbre, effectuée par le démarreur dans la première phase de démarrage, est telle qu'il n'est pas possible de réduire la vitesse de rotation de l'arbre pour la stabiliser dans la fenêtre d'allumage. En d'autre terme, une augmentation trop importante de la vitesse de rotation de l'arbre peut entrainer, comme expliqué ci-après, un passage trop rapide dans la fenêtre d'allumage du turbomoteur, qui ne permet pas l'allumage du turbomoteur.

En effet, dans un turbomoteur, il est courant d'utiliser un démarreur de type électrique se présentant sous la forme d'une machine synchrone alimentée par une batterie via une électronique de puissance et fonctionnant en moteur pendant la phase de démarrage du turbomoteur et en générateur pendant les phases de vol de l'aéronef. Le couple moteur délivré par le démarreur a pour objet de surmonter l'ensemble des couples résistifs résultant principalement de la traînée aérodynamique des parties mises en rotation, de la friction mécanique des pièces en contact et des différents étages des pompes à huile et à carburant du turbomoteur.

Cependant, le couple résistif que le démarreur doit vaincre peut varier de manière importante suivant les conditions environnementales, notamment de température et de pression atmosphérique, auxquelles est soumis le turbomoteur. Or, les règlements de certification imposent généralement de pouvoir effectuer des démarrages à une pluralité d'altitudes et dans diverses conditions climatiques.

Par exemple, par temps froid, c'est-à-dire lorsque la température ambiante est inférieure, par exemple à - 20°C, le couple résistf que doit vaincre le démarreur pour démarrer le turbomoteur augmente fortement par rapport au couple résistif que doit vaincre le démarreur à une température ambiante positive, notamment parce que les couples résistants des pompes à huile et à carburant équipant le turbomoteur sont plus importants par temps froid.

Le démarreur doit donc être apte à permettre un démarrage dans ces conditions, de sorte que sa puissance est prévue à cet effet. Ainsi, on est amené à utiliser des démarreurs surpuissants.

Ce faisant, une telle surpuissance ne permet pas de maîtriser correctement le couple fourni par le démarreur, ce qui peut provoquer une trop forte accélération de l'arbre pouvant conduire à passer trop rapidement dans la fenêtre d'allumage et donc à échouer ou avorter l'allumage du combustible.

EP0623741 décrit un procédé de démarrage d'un turbomoteur pour aéronef selon le préambule de la revendication 1.

La présente invention a pour but d'éliminer au moins en partie ces inconvénients en proposant un procédé efficace de démarrage d'un turbomoteur permettant notamment une pluralité de démarrages consécutifs du turbomoteur, notamment à différentes altitudes.

L'invention concerne un procédé de démarrage d'un turbomoteur pour aéronef selon la revendication 1 et un système pour la mise en oeuvre du procédé selon la revendication 7.

Ainsi, l'invention concerne un procédé de démarrage d'un turbomoteur pour aéronef, ledit turbomoteur comprenant une chambre de combustion, un arbre de compresseur sur lequel est montée une roue de compresseur pour alimenter en air comprimé ladite chambre de combustion, au moins un démarreur relié audit arbre de manière à lui fournir un couple de démarrage de valeur déterminée pour l'entrainer en rotation, ledit procédé comprenant :

- une étape d'accélération de l'arbre de compresseur pendant une première phase de démarrage, puis,
- une étape de stabilisation de la vitesse de rotation de l'arbre de compresseur pendant une deuxième phase de démarrage de sorte à permettre l'allumage du combustible,

le procédé étant remarquable en ce que la vitesse de rotation de l'arbre est régulée de manière à ce que l'accélération de l'arbre demeure sensiblement constante, notamment pendant la première phase de démarrage.

Par le terme « régulée », on entend que la vitesse de rotation de l'arbre est continûment contrôlée, notamment pendant la première phase de démarrage, de sorte que l'accélération de l'arbre reste sensiblement constante quelles que soient les conditions environnementales du turbomoteur (basses température, faibles pressions etc.). Une telle régulation peut être effectuée par une consigne de vitesse ou une consigne de couple pouvant être, par exemple, une valeur respectivement de vitesse ou de couple ou bien un pourcentage d'augmentation ou de diminution respectivement de la vitesse ou du couple.

Par le terme « démarreur », on entend, ici et dans la suite de la description, aussi bien un démarreur simple qu'une génératrice-démarreur.

L'augmentation de la vitesse de rotation de l'arbre à accélération constante pendant la première phase de démarrage permet de contrôler la vitesse de rotation de l'arbre de sorte à atteindre et pouvoir se maintenir dans la fenêtre d'allumage pendant un temps suffisamment long pour permettre l'allumage du turbomoteur, la mise en pression graduelle du circuit carburant en amont des injecteurs de démarrage et de le purger. Sans une telle régulation, le couple fourni par le démarreur pourrait, par exemple par temps froid, être trop important de sorte que cela qu'il conduirait à une accélération trop brutale de l'arbre de sorte à passer trop rapidement dans la fenêtre d'allumage.

Dans l'étape de stabilisation, la vitesse de rotation de l'arbre est maintenue dans un intervalle de vitesse autorisant l'allumage de la chambre de combustion, par exemple compris entre 10 % et 15 % de la vitesse nominale de rotation de l'arbre. Par le terme « vitesse nominale », on entend la vitesse de l'arbre de compresseur lorsque le turbomoteur fonctionne à un régime permettant de fournir la Puissance Maximale de Décollage (PMD).

De préférence, la vitesse de rotation de l'arbre est régulée de manière à ce que l'accélération de l'arbre demeure sensiblement nulle pendant la deuxième phase de démarrage.

La détection de l'allumage peut être réalisée lorsque la température des gaz en sortie du turbomoteur dépasse un seuil prédéterminé. Un intervalle de temps de contrôle peut permettre de juger que la combustion est suffisamment stable pour mettre fin à cette phase de stabilisation.

Le procédé peut comprend en outre, postérieurement à l'allumage du combustible, une étape d'accélération de l'arbre, pendant une troisième phase de démarrage, permettant d'accélérer la roue de compresseur, par exemple jusqu'à la vitesse maximale de fin de séquence de démarrage. Cette étape peut comprendre la stabilisation continue du couple fourni par le démarreur, par exemple par une consigne de couple, à l'arbre de compresseur pendant la durée de la troisième phase de démarrage. Un tel contrôle continu du couple fourni à l'arbre de compresseur par le démarreur permet d'éviter que le démarreur ne fournisse, pendant cette troisième phase, un couple trop important qui risquerait de conduire à une extinction de la chambre de combustion si la température de la chambre de combustion devient trop faible. En effet, lorsque le couple est trop important, l'accélération de l'arbre qui en résulte peut augmenter le débit d'air fourni par le compresseur par rapport au débit carburant de telle sorte que le rapport carburant/air devient trop faible et que le moteur s'éteint. Cela permet notamment un fonctionnement optimal du turbomoteur lors de la phase, d'accélération de l'arbre, postérieure à l'allumage du combustible. Bien entendu, la stabilisation continue du couple fourni par le démarreur peut aussi être réalisée par une consigne de vitesse. Lorsque la consigne de couple est envoyée par un calculateur moteur de l'aéronef, l'utilisation d'une consigne de couple peut permettre avantageusement de ne pas interférer avec une boucle de vitesse utilisée par le calculateur pour le dosage du débit carburant. Durant la troisième phase, l'accélération va dépendre de l'évolution du couple résistant du turbomoteur qui peut varier en fonction notamment de la vitesse de rotation l'arbre et de la thermique du turbomoteur.

De préférence, la vitesse de rotation de l'arbre est régulée de manière à ce que l'accélération de l'arbre demeure sensiblement constante pendant la troisième phase de démarrage.

De préférence, la régulation de la vitesse est effectuée périodiquement, notamment pendant toute la durée de la première phase. Par exemple, la période peut être inférieure ou égale à la seconde, de préférence inférieure ou égale à 100 ms. Une telle périodicité de la régulation permet un contrôle très précis de l'accélération de l'arbre de sorte que celle-ci reste sensiblement constante, notamment pendant toute la durée de la première phase de démarrage.

De préférence, l'étape de régulation comprend :

- une étape d'obtention d'une valeur d'accélération sur un intervalle de temps,
- une étape de calcul de la différence entre la valeur d'accélération obtenue et une valeur d'accélération de référence,
- une étape de comparaison de la différence calculée à un seuil prédéterminé,
- une étape de détermination d'une consigne de vitesse ou de couple à partir de la différence calculée en cas de dépassement dudit seuil.

Dans une forme de réalisation alternative du procédé selon l'invention, l'étape de régulation comprend :

- une étape d'obtention d'une première valeur d'accélération sur un premier intervalle de temps,
- une étape d'obtention d'une deuxième valeur d'accélération sur un deuxième intervalle de temps, de préférence consécutif au premier intervalle de temps,
- une étape de calcul de la différence entre la première valeur d'accélération obtenue et la deuxième valeur d'accélération obtenue,
- une étape de comparaison de la différence calculée à un seuil prédéterminé,
- une étape de détermination d'une consigne de vitesse ou de couple à partir de la différence calculée en cas de dépassement dudit seuil.

De manière préférée, l'étape d'obtention d'une valeur d'accélération est réalisée à partir de deux mesures consécutives de la vitesse de rotation de l'arbre.

Ainsi, par exemple, une mesure de la vitesse de rotation de l'arbre peut être effectuée périodiquement puis, pour chaque intervalle de temps entre deux mesures de vitesse, l'accélération de l'arbre, sur cet intervalle de temps, est calculée.

La valeur d'accélération calculée peut alors être comparée à une valeur de référence, constante et prédéterminée, ou bien à une autre valeur d'accélération précédemment calculée.

Une consigne de vitesse est alors déterminée à partir de la comparaison effectuée de sorte à permettre l'adaptation de la vitesse de rotation de l'arbre. La consigne de vitesse indique, par exemple, la vitesse que l'arbre doit atteindre pour que l'accélération soit ramenée à la valeur de référence ou bien à une valeur obtenue sur un précédent intervalle de temps.

Pour démarrer rapidement le turbomoteur, l'accélération doit être au moins égale à 2.5% de la vitesse nominale par seconde de sorte que la durée de la première phase soit inférieure à 4 secondes.

De même, la valeur de l'accélération doit être inférieure à une valeur maximum, de l'ordre de 5% de la vitesse nominale par seconde, de sorte à pouvoir stabiliser la vitesse de rotation de l'arbre dans la fenêtre d'allumage sans dépasser la valeur maximale de la fenêtre au-delà de laquelle le volume d'air dans la chambre de combustion sera trop important et empêchera l'allumage du combustible.

La détermination de la valeur de référence de l'accélération peut être réalisée à partir de conditions environnementales du turbomoteur. Ainsi, par exemple, la valeur de référence peut être déterminée, au moment du démarrage, à partir des valeurs de température et de pression atmosphériques ambiantes qui influent directement sur les couples résistifs que doit vaincre le démarreur. Ces conditions peuvent varier rapidement, notamment lorsque le pilote doit effectuer un redémarrage en vol en altitude suite à une extinction du turbomoteur

Ainsi, avec le procédé selon l'invention, la régulation continue de la vitesse de rotation de l'arbre pour rendre l'accélération constante pendant la première phase de démarrage peut être effectuée en tenant compte de la variation des conditions environnementales du turbomoteur de sorte que le couple fourni à l'arbre par le démarreur soit adapté aux couples résistifs correspondants à ces conditions que le démarreur doit vaincre pour permettre un contrôle précis de l'accélération de l'arbre et donc un allumage réussi du combustible lors de la phase de stabilisation.

Le procédé peut également comprendre une étape préliminaire de mise en rotation de l'arbre par le démarreur.

L'invention concerne aussi un système pour le démarrage d'un turbomoteur d'un aéronef, ledit système comprenant un turbomoteur et des moyens de gestion dudit turbomoteur, le turbomoteur comprenant une chambre de combustion, un arbre de compresseur sur lequel est montée une roue de compresseur pour alimenter en air comprimé ladite chambre de combustion, au moins un démarreur relié audit arbre de manière à lui fournir un couple de démarrage de valeur déterminée pour l'entrainer en rotation, ledit démarreur comprenant des moyens d'accélération de l'arbre de compresseur pendant une première phase de démarrage, et des moyens de stabilisation de la vitesse de rotation de l'arbre de compresseur pendant une deuxième phase de démarrage de façon à permettre l'injection de combustible dans la chambre de combustion et l'allumage du combustible, les moyens de gestion étant configurés pour réguler la vitesse de rotation de l'arbre en déterminant une consigne de vitesse ou de couple à partir du calcul de la différence calculée entre la valeur d'accélération de l'arbre et la valeur d'accélération de référence, de manière à ce que l'accélération de l'arbre demeure sensiblement constante, les moyens de gestion étant configurés pour comparer la différence calculée entre la valeur d'accélération de l'arbre et la valeur d'accélération de référence à un seuil prédéterminé et pour déterminer la consigne de vitesse ou de couple en cas dépassement dudit seuil.

De préférence, les moyens de gestion sont en outre configurés pour réguler la vitesse de rotation de l'arbre de manière à ce que l'accélération de l'arbre demeure sensiblement constante pendant la deuxième phase de démarrage.

De préférence encore, les moyens de gestion sont en outre configurés pour réguler la vitesse de rotation de l'arbre de manière à ce que l'accélération de l'arbre soit maximale pendant la troisième phase de démarrage.

Selon une caractéristique de l'invention, le démarreur est électrique et comprend un circuit électronique permettant le contrôle du couple fourni à l'arbre.

L'invention concerne aussi un aéronef comprenant un turbomoteur et un système tel que défini ci-dessus.

D'autres caractéristiques et avantages de l'invention apparaîtront lors de la description qui suit faite en regard des figures annexées données à titre d'exemples non limitatifs et dans lesquelles des références identiques sont données à des objets semblables.

La figure 1 représente schématiquement le système selon l'invention.

La figure 2 illustre le procédé, mis en oeuvre par le système, selon l'invention.

La figure 3 est un diagramme représentant les trois phases de démarrage d'un turbomoteur d'un aéronef équipé du système selon l'invention.

La figure 4 est un diagramme de vitesse de rotation de l'arbre de compresseur du système selon l'invention.

Description du système selon l'invention

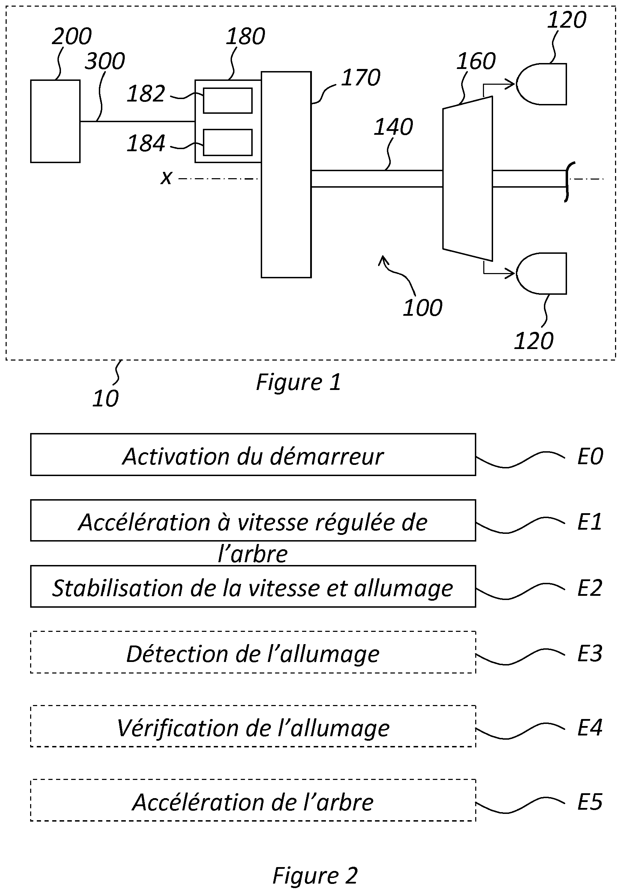

Le système 10 pour le démarrage d'un turbomoteur pour aéronef selon l'invention, illustré par la figure 1, comprend un turbomoteur 100 et des moyens de gestion 200 dudit turbomoteur 100.

Le turbomoteur 100 comprend une chambre de combustion 120, un arbre de compresseur 140 sur lequel est montée une roue de compresseur 160 pour alimenter en air comprimé ladite chambre de combustion 120 et un démarreur électrique 180 relié audit arbre 140, par une boite de relais de transmission 170, de manière à fournir à l'arbre 140 un couple de démarrage de valeur déterminée pour l'entrainer en rotation.

L'arbre de compresseur 140 est disposé coaxialement avec la roue de compresseur 160 et la chambre de combustion 120 selon un axe X.

La boite relais de transmission 170, qui peut se présenter, par exemple, sous la forme de plusieurs étages de pignons, permet de transmettre le couple fourni par le démarreur à l'arbre de compresseur 140. Il est bien entendu que le démarreur 180 pourrait être monté directement sur l'arbre de compresseur 140 sans que cela ne limite la portée de la présente invention.

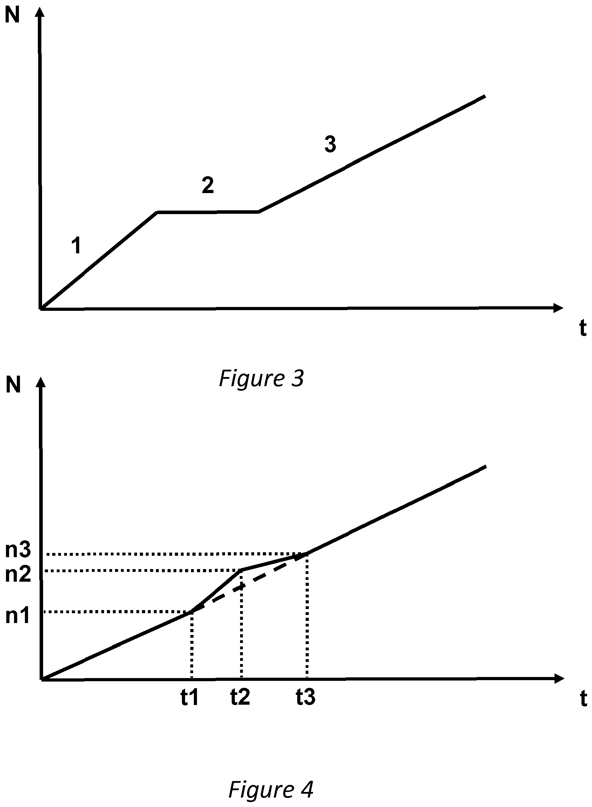

Le démarreur 180 comprend des moyens d'accélération 182 de l'arbre de compresseur 140 pour accélérer la vitesse de rotation de l'arbre ce compresseur 140 pendant une première phase de démarrage P1 et pendant une troisième phase de démarrage P3, en référence à la figure 3.

Le démarreur 180 comprend aussi des moyens de stabilisation 184 de la vitesse de rotation de l'arbre de compresseur 140 pendant une deuxième phase de démarrage P2, en référence à la figure 3, de sorte à permettre l'injection de combustible dans la chambre de combustion 120 et l'allumage dudit combustible.

Les moyens d'accélération 182 et/ou de stabilisation 184 sont contrôlés par un circuit électronique (non représenté) de manière à piloter le niveau de couple fourni à l'arbre 140 par le démarreur 180. Un tel circuit électronique est configuré pour recevoir des consignes de vitesse et/ou de couple de sorte que le démarreur 180 fournisse, à l'arbre 140, un couple permettant d'atteindre ladite vitesse ou bien égale audit couple.

Les moyens de gestion 200 du turbomoteur 100 peuvent se présenter sous la forme d'un calculateur, par exemple du type calculateur moteur du type FADEC (Full Authority Digital Engine Control), relié au circuit électronique de contrôle du démarreur 180 par un ou plusieurs liens de communication 300, par exemple un ou plusieurs bus numériques, permettant l'envoi, par les moyens de gestion 200, de consignes, par exemple de vitesse et/ou de couple, au circuit électronique de contrôle du démarreur 180.

Les moyens de gestion 200 du turbomoteur 100 permettent, par l'envoi, au démarreur 180, de consignes, la régulation la vitesse de rotation de l'arbre 140 de manière à ce que son accélération demeure sensiblement constante durant la première phase de démarrage P1 quelles que soient les conditions environnementales du turbomoteur 100, telles que par exemple les conditions de température et de pression.

Mis en oeuvre du procédé selon l'invention

Le procédé selon l'invention est illustré par la figure 2 et décrit en référence à la figure 3.

Lorsqu'un démarrage du turbomoteur doit être effectué, au sol ou en vol, une commande d'activation est envoyée au démarreur électrique 180, dans une étape E0, afin qu'il fournisse un couple à l'arbre 140, via le relais de transmission 170.

L'arbre de compresseur 140 est alors accéléré, lors d'une étape E1, par le démarreur 180 pendant une première phase de démarrage P1.

Durant cette première phase de démarrage P1, la vitesse de rotation de l'arbre 140 est régulée de manière à ce que l'accélération de l'arbre 140 demeure sensiblement constante durant la première phase P1.

Plus précisément, une fois l'arbre de compresseur 140 mis en rotation par le démarreur 180, une mesure de la vitesse N de l'arbre 140 est effectuée périodiquement, par exemple toutes les 100 ms, par un capteur (non représenté).

Cette mesure est communiquée périodiquement aux moyens de gestion 200, par exemple, via le lien de communication 300. Les moyens de gestion 200 calculent alors une valeur d'accélération sur un intervalle de temps [t1, t2] à partir de deux mesures de vitesse n1 et n2 consécutives, mesurées respectivement aux instants t1 et t2, illustrés par la figure 4, selon la formule :

$$A[t1, t2] = \frac{n2 - n1}{t2 - t1}$$

L'accélération $A_{MES}$ mesurée sur l'intervalle de temps [t1, t2] est alors comparée à une accélération de référence $A_{REF}$ correspondant à une valeur d'accélération constante prédéterminée, par exemple, à partir des conditions environnementales du turbomoteur 100 déterminées par retour d'expérience pour lesquelles on dispose de tables de correspondance qui associent des conditions ambiantes déterminées à une accélération de référence $A_{REF}$. Bien entendu, la valeur de référence $A_{REF}$ peut être différente pour chaque phase de démarrage.

En ce qui concerne la première phase de démarrage, l'accélération de référence $A_{REF}$ peut être déterminée de sorte que celle-ci dure un temps suffisamment long pour ne pas devoir accélérer trop brutalement et dépasser la fenêtre de démarrage mais suffisamment court pour démarrer le turbomoteur rapidement, par exemple entre trois et quatre secondes. Ainsi, de préférence, l'accélération de référence $A_{REF}$ est au moins égale à 2.5 % de la vitesse nominale par seconde, de sorte que la durée de la première phase soit inférieure à 4 secondes, et est inférieure à 25 % de la vitesse nominale par seconde, de façon à pouvoir stabiliser la vitesse de rotation de l'arbre dans la fenêtre d'allumage.

En référence à la figure 4, l'arbre a une accélération correspondant à l'accélération de référence $A_{REF}$ précédemment à l'instant t1 et postérieurement à l'instant t3. Avec le procédé selon l'invention, lorsque la différence entre l'accélération mesurée $A_{MES}$ sur l'intervalle de temps [t1, t2] et la valeur de référence $A_{REF}$ est supérieure à un seuil prédéterminé, par exemple de 5 % de la valeur de référence $A_{REF}$, c'est-à-dire lorsque l'accélération n'est pas sensiblement constante et égale à la valeur d'accélération de référence prédéterminée $A_{REF}$, les moyens de gestion 200 déterminent et envoient au circuit de contrôle du démarreur 180 une consigne de vitesse de rotation $V_{CONS}$ de l'arbre 140 permettant de corriger cette différence. Une telle consigne a pour but de permettre la régulation de l'accélération de l'arbre 140 par le démarreur, c'est-à-dire que celle-ci converge, au plus tôt, par exemple dès l'intervalle de temps suivant [t2, t3], vers la valeur de référence prédéterminée $A_{REF}$.

Ainsi, en référence à la figure 4, la consigne de vitesse $V_{CONS}$ envoyée au démarreur 180, par les moyens de gestion 200, indique une réduction de la vitesse de rotation de l'arbre 140 de sorte que l'accélération de l'arbre sur l'intervalle de temps [t2, t3] soit inférieure à l'accélération de référence $A_{REF}$ de sorte qu'elle converge vers ladite valeur de référence $A_{REF}$, l'arbre atteignant alors la vitesse n3 à l'instant t3.

Les moyens de gestion 200 envoient la consigne de vitesse $V_{CONS}$ au circuit de contrôle du démarreur 180, par exemple, à l'instant t2 ou peu de temps après, de sorte que le démarreur 180, via son circuit de contrôle, adapte le couple fourni à l'arbre 140 et donc la vitesse de rotation de l'arbre 140 rapidement à partir de la consigne de vitesse reçue $V_{CONS}$.

Le procédé selon l'invention permet donc de faire converger la valeur de l'accélération de l'arbre de compresseur 140 vers une valeur de référence $A_{REF}$ lorsqu'elle s'en écarte notablement, notamment pendant la durée de la première phase de démarrage P1.

Lorsqu'un seuil prédéterminé de vitesse de rotation de l'arbre 140, par exemple compris dans la fenêtre d'allumage, est atteint, la deuxième phase de démarrage P2 débute. Une étape E2 de stabilisation permet de stabiliser la vitesse de rotation de l'arbre 140 dans la fenêtre d'allumage pendant une durée suffisante pour permettre l'injection de combustible dans la chambre de combustion 120 ainsi que l'allumage complet dudit combustible. De préférence, cette étape de stabilisation E2 est réalisée en fixant la valeur de l'accélération de référence $A_{REF}$ à zéro de sorte que la vitesse soit constante et maintenue, par exemple, entre 10 % et 15 % de la vitesse nominale du turbomoteur.

Le procédé selon l'invention peut aussi comprendre une étape E3 de détection de l'allumage du combustible pendant laquelle on mesure la température du flux de gaz en sortie du turbomoteur et on compare ladite mesure avec une valeur de température de référence indiquant l'allumage de la chambre de combustion.

Une fois l'allumage détecté, une étape E4 de latence, par exemple pendant 0,5 seconde, permettant de s'assurer que l'allumage a été réalisé correctement et de manière pérenne, avant de débuter une troisième phase de démarrage du turbomoteur pendant laquelle la vitesse de rotation de l'arbre 140 augmente.

Ainsi, dans une étape E5 d'accélération de l'arbre 140, la roue de compresseur 160 est accélérée, par exemple jusqu'à sa vitesse maximale, pendant la phase de démarrage P3 de sorte que le turbomoteur puisse atteindre un régime de vol de l'aéronef.

De préférence, cette étape E5 comprend une stabilisation continue du couple fourni par le démarreur à l'arbre de compresseur pendant la troisième phase P3. De manière similaire à l'étape E2, les moyens de gestion 200 permettent de réguler le couple par l'envoi de consignes de couple $C_{CONS}$ au démarreur.

Le couple résistant du turbomoteur dépend de nombreux facteurs, notamment de la vitesse de rotation de l'arbre et de la thermique du turbomoteur. Or, comme la différence entre le couple fourni par le démarreur et le couple résistant du turbomoteur est proportionnelle à l'accélération de l'arbre, l'accélération variera en fonction du couple résistant du turbomoteur, à consigne de couple $C_{CONS}$ de démarreur constante.

Un tel contrôle continu du couple fourni à l'arbre de compresseur 140 par le démarreur 180 permet d'éviter que le démarreur 180 ne fournisse, pendant cette phase, un couple trop important qui risquerait de conduire à l'extinction de la chambre de combustion du turbomoteur 100 comme expliqué précédemment.

Enfin, le démarreur 180 peut être arrêté pendant la troisième phase P3, par exemple au début de celle-ci.

Ainsi, le procédé et le système selon l'invention permettent de contrôler continûment la vitesse de rotation de l'arbre, notamment pendant la première phase de démarrage, de sorte que l'accélération de l'arbre reste sensiblement constante quelles que soient les conditions environnementales du turbomoteur (basses température, faibles pressions etc.).

## Revendications

1. Procédé de démarrage d'un turbomoteur pour aéronef, ledit turbomoteur (100) comprenant une chambre de combustion (120), un arbre de compresseur (140) sur lequel est montée une roue de compresseur (160) pour alimenter en air comprimé ladite chambre de combustion (120), au moins un démarreur (180) relié audit arbre (140) de manière à lui fournir un couple de démarrage de valeur déterminée pour l'entrainer en rotation, ledit procédé comprenant :

   - une étape (E1) d'accélération de l'arbre de compresseur (140) pendant une première phase de démarrage (P1), puis,
   - une étape (E2) de stabilisation de la vitesse de rotation de l'arbre de compresseur (140) pendant une deuxième phase de démarrage (P2) de sorte à permettre l'injection de combustible dans la chambre de combustion (120) et l'allumage du combustible,

   la vitesse de rotation de l'arbre (140) étant régulée au cours des étapes d'accélération (E1) et de stabilisation (E2) de manière à ce que l'accélération de l'arbre (140) demeure sensiblement constante, le procédé étant **caractérisé en ce que** pendant l'étape (E1) d'accélération, il comprend :

   - une étape d'obtention d'une valeur d'accélération sur un intervalle de temps,
   - une étape de calcul de la différence entre la valeur d'accélération obtenue et une valeur d'accélération de référence,
   - une étape de comparaison de la différence calculée à un seuil prédéterminé,
   - une étape de détermination d'une consigne de vitesse ou de couple à partir de la différence calculée en cas de dépassement dudit seuil.

2. Procédé selon la revendication 1, dans lequel, pendant l'étape de stabilisation (E2), la vitesse de rotation de l'arbre de compresseur (140) est maintenue entre 10 % et 15 % de la vitesse nominale de rotation de l'arbre (140).

3. Procédé selon l'une des revendications précédentes, dans lequel une étape de détection (E3) de l'allumage est réalisée lorsque la température des gaz en sortie du turbomoteur (100) dépasse un seuil pré

déterminé.

4. Procédé selon l'une des revendications précédentes, le procédé comprenant en outre, postérieurement à l'allumage du combustible, une étape (E5) d'accélération de l'arbre (140) permettant d'accélérer la roue de compresseur (160), ladite accélération étant régulée par une consigne de couple.

5. Procédé selon l'une des revendications précédentes, dans lequel la régulation de la vitesse est effectuée périodiquement.

6. Procédé selon l'une des revendications précédentes, dans lequel l'étape d'obtention d'une valeur d'accélération est réalisée à partir de deux mesures consécutives de la vitesse de rotation de l'arbre (140).

7. Système, pour la mise en oeuvre du procédé selon l'une des revendications précédentes, pour le démarrage d'un turbomoteur d'un aéronef, ledit système (10) comprenant un turbomoteur (100) et des moyens de gestion (200) dudit turbomoteur (100), le turbomoteur (100) comprenant une chambre de combustion (120), un arbre de compresseur (140) sur lequel est montée une roue de compresseur (160) pour alimenter en air comprimé ladite chambre de combustion (120), au moins un démarreur (180) relié audit arbre (140) de manière à lui fournir un couple de démarrage de valeur déterminée pour l'entrainer en rotation, ledit démarreur (180) comprenant des moyens d'accélération (182) de l'arbre de compresseur (140) pendant une première phase de démarrage, et des moyens de stabilisation (184) de la vitesse de rotation de l'arbre de compresseur (140) pendant une deuxième phase de démarrage de sorte à permettre l'injection de combustible dans la chambre de combustion (120) et l'allumage du combustible, les moyens de gestion (200) étant configurés pour réguler la vitesse de rotation de l'arbre (140) en déterminant une consigne de vitesse ou de couple à partir du calcul de la différence entre une valeur d'accélération de l'arbre et une valeur d'accélération de référence, de manière à ce que l'accélération de l'arbre (140) demeure sensiblement constante, les moyens de gestion étant configurés pour comparer la différence calculée entre la valeur d'accélération de l'arbre et la valeur d'accélération de référence à un seuil prédéterminé et pour déterminer la consigne de vitesse ou de couple en cas dépassement dudit seuil.

8. Système selon la revendication 7, dans lequel le démarreur (180) est électrique et comprend un circuit électronique de contrôle du couple fourni à l'arbre (140).

**9.** Aéronef comprenant un turbomoteur et un système selon l'une des revendications 7 ou 8 pour la mise en oeuvre du procédé selon l'une des revendications 1 à 6.

**Patentansprüche**

**1.** Verfahren zum Starten eines Turbomotors für ein Luftfahrzeug, wobei der Turbomotor (100) umfasst: eine Verbrennungskammer (120), eine Kompressorwelle (140), auf der ein Kompressorrad (160) montiert ist, um die Verbrennungskammer (120) mit verdichteter Luft zu versorgen, mindestens einen Starter (180), der mit der Welle (140) verbunden ist, um dieser eine Anlaufdrehzahl mit einem vorherbestimmten Wert zu liefern, um diese in Drehung mitzuführen, wobei das Verfahren umfasst:

- einen Schritt (E1) der Beschleunigung der Kompressorwelle (140) während einer ersten Startphase (P1), anschließend
- einen Schritt (E2) der Stabilisation der Drehgeschwindigkeit der Kompressorwelle (140) während einer zweiten Startphase (P2) derart, dass das Einspritzen von Kraftstoff in die Verbrennungskammer (120) und die Zündung des Kraftstoffs ermöglicht werden,

wobei die Drehgeschwindigkeit der Welle (140) während des Beschleunigungs-(E1) und Stabilisationsschritts (E2) geregelt wird, damit die Beschleunigung der Welle (140) im Wesentlichen konstant bleibt, wobei das Verfahren **dadurch gekennzeichnet ist, dass** dieses während des Beschleunigungsschritts (E1) umfasst:

- einen Schritt des Erhalts eines Beschleunigungswerts in einem Zeitintervall,
- einen Schritt der Berechnung der Differenz zwischen dem erhaltenen Beschleunigungswert und einem Referenzbeschleunigungswert,
- einen Schritt des Vergleichs der berechneten Differenz mit einer vorherbestimmten Schwelle,
- einen Schritt der Bestimmung eines Geschwindigkeits- oder Drehzahl-Sollwerts aus der berechneten Differenz im Fall der Überschreitung der Schwelle.

**2.** Verfahren nach Anspruch 1, wobei während des Stabilisationsschritts (E2) die Drehgeschwindigkeit der Kompressorwelle (140) zwischen 10 % und 15 % der Nenndrehgeschwindigkeit der Welle (140) gehalten wird.

**3.** Verfahren nach einem der vorhergehenden Ansprüche, wobei ein Schritt der Detektion (E3) der Zündung durchgeführt wird, wenn die Temperatur von Gasen am Ausgang des Turbomotors (100) eine vorherbestimmte Schwelle überschreitet.

**4.** Verfahren nach einem der vorhergehenden Ansprüche, wobei das Verfahren außerdem, nach der Zündung des Kraftstoffs, einen Schritt (E5) der Beschleunigung der Welle (140) umfasst, der es ermöglicht, das Kompressorrad (160) zu beschleunigen, wobei die Beschleunigung durch einen Drehzahl-Sollwert geregelt wird.

**5.** Verfahren nach einem der vorhergehenden Ansprüche, wobei die Regelung der Geschwindigkeit periodisch bewirkt wird.

**6.** Verfahren nach einem der vorhergehenden Ansprüche, wobei der Schritt des Erhalts eines Beschleunigungswerts ausgehend von zwei konsekutiven Messungen der Drehgeschwindigkeit der Welle (140) durchgeführt wird.

**7.** System zur Durchführung des Verfahrens nach einem der vorhergehenden Ansprüche, zum Starten eines Turbomotors für ein Luftfahrzeug, wobei das System (10) einen Turbomotor (100) und Steuermittel (200) des Turbomotors (100) umfasst, wobei der Turbomotor umfasst: eine Verbrennungskammer (120), eine Kompressorwelle (140), auf der ein Kompressorrad (160) montiert ist, um die Verbrennungskammer (120) mit verdichteter Luft zu versorgen, mindestens einen Starter (180), der mit der Welle (140) verbunden ist, um dieser eine Anlaufdrehzahl mit einem vorherbestimmten Wert zu liefern, um diese in Drehung mitzuführen, wobei der Starter (180) Beschleunigungsmittel (182) der Kompressorwelle (140) während einer ersten Startphase und Stabilisationsmittel (184) der Drehgeschwindigkeit der Kompressorwelle (140) während einer zweiten Startphase derart umfasst, dass das Einspritzen von Kraftstoff in die Verbrennungskammer (120) und die Zündung des Kraftstoffs ermöglicht werden, wobei die Steuermittel (200) ausgelegt sind, die Drehgeschwindigkeit der Welle (140) durch die Bestimmung eines Geschwindigkeits- oder Drehzahl-Sollwerts aus der Berechnung der Differenz zwischen einem Beschleunigungswert der Welle und einem Referenzbeschleunigungswerts zu regeln, damit die Beschleunigung der Welle (140) im Wesentlichen konstant bleibt, wobei die Steuermittel ausgelegt sind, die berechnete Differenz zwischen dem Beschleunigungswert der Welle und dem Referenzbeschleunigungswert mit einer vorherbestimmten Schwelle zu verglichen und den Geschwindigkeits- oder Drehzahl-Sollwert im Fall der Überschreitung der Schwelle zu bestimmen.

**8.** System nach Anspruch 7, wobei der Starter (180) elektrisch ist und eine elektronische Steuerschaltung der Drehzahl umfasst, die der Welle (140) geliefert wird.

9. Luftfahrzeug, welches einen Turbomotor und ein System nach einem der Ansprüche 7 oder 8 zur Durchführung des Verfahrens nach einem der Ansprüche 1 bis 6 umfasst.

**Claims**

1. Method for starting an aircraft turboshaft engine, said turboshaft engine (100) comprising a combustion chamber (120), a compressor shaft (140) on which a compressor wheel (160) is mounted to feed compressed air to said combustion chamber (120), at least one starter (180) connected to said shaft (140) so as to provide it with a specified starting torque for driving it in rotation, said method comprising:

   - a step (E1) of accelerating the compressor shaft (140) during a first start-up phase (P1), then
   - a step (E2) of stabilising the rotational speed of the compressor shaft (140) during a second start-up phase (P2) so as to allow fuel to be injected into the combustion chamber (120) and to allow the fuel to be ignited,

   the rotational speed of the shaft (140) being regulated during the acceleration step (E1) and the stabilisation step (E2) such that the acceleration of the shaft (140) remains substantially constant, the method being **characterised in that**, during the acceleration step (E1), it comprises:

   - a step of obtaining an acceleration value over an interval of time,
   - a step of calculating the difference between the obtained acceleration value and a reference acceleration value,
   - a step of comparing the calculated difference with a predetermined threshold,
   - a step of determining a speed or torque reference from the calculated difference if said threshold is exceeded.

2. Method according to claim 1, wherein, during the stabilisation step (E2), the rotational speed of the compressor shaft (140) is kept between 10 % and 15 % of the nominal rotational speed of the shaft (140).

3. Method according to any of the preceding claims, wherein a step (E3) of detecting ignition is carried out when the temperature of the gases output from the turboshaft engine (100) exceeds a predetermined threshold.

4. Method according to any of the preceding claims, the method further comprising, after ignition of the fuel, a step (E5) of accelerating the shaft (140), which allows the compressor wheel (160) to be accelerated, said acceleration being regulated by a torque reference.

5. Method according to any of the preceding claims, wherein the speed is regulated periodically.

6. Method according to any of the preceding claims, wherein the step of obtaining an acceleration value is carried out from two consecutive measurements of the rotational speed of the shaft (140).

7. System for implementing the method according to any of the preceding claims for starting up an aircraft turboshaft engine, said system (10) comprising a turboshaft engine (100) and means (200) for managing said turboshaft engine (100), the turboshaft engine (100) comprising a combustion chamber (120), a compressor shaft (140) on which a compressor wheel (160) is mounted to feed compressed air to said combustion chamber (120), at least one starter (180) connected to said shaft (140) so as to provide it with a specified starting torque for driving it in rotation, said starter (180) comprising means (182) for accelerating the compressor shaft (140) during a first start-up phase, and means (184) for stabilising the rotational speed of the compressor shaft (140) during a second start-up phase, so as to allow fuel to be injected into the combustion chamber (120) and to allow the fuel to be ignited, the management means (200) being configured to regulate the rotational speed of the shaft (140) by determining a speed or torque reference from the calculation of the difference between a value for the acceleration of the shaft and a reference acceleration value, such that the acceleration of the shaft (140) remains substantially constant, means for managing being configured to compare the calculated difference between the value for the acceleration of the shaft and a reference acceleration value with a predetermined threshold and to determine a speed or torque reference from the calculated difference if said threshold is exceeded.

8. System according to claim 7, wherein the starter (180) is electric and comprises an electronic circuit for controlling the torque provided to the shaft (140).

9. Aircraft comprising a turboshaft engine and a system according to either claim 7 or claim 8 for implementing the method according to any of claims 1 to 6.

Figure 1

| Activation du démarreur | E0 |
|---|---|

| Accélération à vitesse régulée de l'arbre | E1 |
|---|---|

| Stabilisation de la vitesse et allumage | E2 |
|---|---|

| Détection de l'allumage | E3 |
|---|---|

| Vérification de l'allumage | E4 |
|---|---|

| Accélération de l'arbre | E5 |
|---|---|

Figure 2

Figure 3

Figure 4

**RÉFÉRENCES CITÉES DANS LA DESCRIPTION**

**Documents brevets cités dans la description**

- WO 2011056360 A

- EP 0623741 A